# EUROPÄISCHE PATENTSCHRIFT

(11) **EP 3 239 650 B1**
(45) Veröffentlichungstag und Bekanntmachung des Hinweises auf die Patenterteilung: **08.01.2020**
(21) Anmeldenummer: 17000709.0
(22) Anmeldetag: 26.04.2017
(51) Int. Cl.: G01B 7/02, B65H 49/20, B65H 61/00

(54) **MESSGERÄT ZUM BESTIMMEN VON KABELLÄNGEN**
MEASURING INSTRUMENT FOR DETERMINING CABLE LENGTHS
APPAREIL DE MESURE DESTINÉ À LA DÉTERMINATION DE LONGUEURS DE CÂBLE

(30) Priorität: 26.04.2016 DE 202016102194 U
(43) Veröffentlichungstag der Anmeldung: 01.11.2017
(73) Patentinhaber: Jehle, Paul, 88214 Ravensburg (DE)
(72) Erfinder: Jehle, Paul, 88214 Ravensburg (DE)
(74) Vertreter: Riebling, Peter

(56) Entgegenhaltungen:
- DE-A1- 2 023 123
- DE-U1- 9 208 515
- US-A- 5 339 022
- US-A1- 2003 128 039

## Beschreibung

Die Erfindung betrifft ein Messgerät und ein Verfahren zum Bestimmen von Kabellängen.

Aus dem Stand der Technik sind zahlreiche Messgeräte zum Bestimmen von Kabellängen bekannt. Auf Baustellen werden die benötigten Kabel auf Rollen bzw. Kabeltrommeln angeliefert; die Kabel werden aus praktischen Gründen sodann nach Bedarf abgerollt und sofort verbaut. Um sicher zu gehen, dass das Kabelstück lang genug ist, wird das abgerollte Kabel erst dann abgeschnitten, wenn beim Verlegen des Kabels die benötigte Kabelstrecke erreicht ist. Diese Vorgehensweise hat aber den Nachteil, dass die tatsächlich verbaute Kabellänge dann jedoch nicht ohne weiteres bekannt ist. Eine Bestimmung der Kabellänge erfolgt in solchen Fällen nachträglich, entweder durch eine Abschätzung anhand der aus den Bauplänen bekannten Größen oder durch nachträgliches Abmessen von Hand mittels eines Zollstocks. Das nachträgliche Abmessen mit einem Zollstock ist in der Regel sehr schwierig und aufwendig, weil ein in einem Haus verlegtes Kabel nicht immer völlig zugänglich ist, vor allem bei Unter-Putz-Verlegung.

Mit der Druckschrift DE 92 08 515 U1 wird ein Messgerät zur Bestimmung von Kabellängen offenbart. Hierfür wird an eine Kabelabrollvorrichtung das Messgerät installiert, welches während des Abrollvorganges die Länge des abgerollten Kabels misst.

Die DE 20 23 123 A1 beschreibt ein Verfahren und Anordnung zur kontinuierlichen Längenmessung von Kabeln. Hierfür wird eine mechanische Messvorrichtung eingesetzt, welche die aktuelle Länge des Kabels bestimmt.

Mit der Druckschrift US 5 339 022 A wird ein Messgerät zum Bestimmen der Länge eines zweiadrigen Kabels offenbart, wobei stets nur die Länge des gesamten Kabels bestimmbar ist.

Bei der US 2003/128039 A1 wird durch eine Kapazitätsmessung des Kabels die aktuelle Kabellänge festgestellt.

Aufgabe der Erfindung ist es daher, ein Messgerät bereitzustellen, welches eine einfache Bestimmung einer Länge eines Kabelstückes ermöglicht, das von einem Kabel abgetrennt wurde.

Die Aufgabe wird durch die Merkmale der unabhängigen Ansprüche 1, 2 und 9 gelöst.

Durch die in den abhängigen Ansprüchen genannten Maßnahmen sind vorteilhafte Ausführungen und Weiterbildungen der Erfindung möglich.

Ein erfindungsgemäßes Messgerät ist jeweils in den unabhängigen Ansprüchen 1 und 2 definiert. Eine Vorrichtung mit Kabelrolle und einem erfindungsgemäßen Messgerät ist im Anspruch 8 definiert. Schließlich ist ein erfindungsgemäßes Verfahren im unabhängigen Anspruch 9 definiert.

Das erfindungsgemäße Messgerät dient zur Bestimmung von Kabellängen, wobei das Messgerät, insbesondere für diesen Zweck, Messdaten erfassen kann. Bei einem Kabel kann es sich z. B. um eine ein- oder mehradrige elektrische Leitung handeln. Ein derartiges Kabel kann zur Energieversorgung und/oder zur Datenübertragung genutzt werden. Neben solchen elektrischen Kabeln kommen grundsätzlich auch optische Lichtwellenleiter in Betracht, deren Länge z. B. durch eine Laufzeitmessung bestimmt werden kann.

Eines der erfindungsgemäßen Messgeräte umfasst unter Anderem aus, dass eine Übertragungsvorrichtung zur Übertragung der vom Messgerät gemessenen Daten bzw. der bestimmten Kabellängen. Ferner ist das erfindungsgemäße Messgerät dazu ausgebildet, eine zeitliche Abfolge von Messdaten aufzunehmen und beim Auftreten einer Änderung im Verlauf der zeitlichen Abfolge der Messdaten, diese festzustellen und damit die Übertragung von Messdaten auszulösen bzw. zu triggern. Sobald also die Änderung aufgetreten ist, wird die Übertragungsvorrichtung dazu veranlasst, die gemessenen Daten zu übertragen. Insbesondere kann es sich bei den Messdaten, die übertragen werden, um solche handeln, aus denen die Kabellänge bestimmbar ist oder welche direkt die Kabellänge abbilden. Ein Teil der Messdaten kann aber auch Informationen enthalten, die nicht in direktem Zusammenhang mit der Kabellängenbestimmung stehen.

Grundsätzlich liegt dem erfindungsgemäßen Messgerät die Idee zugrunde, dass von einem Kabelvorrat beispielsweise einer Kabelrolle, ein Stück Kabel mit einer bestimmten Länge abgeschnitten werden muss. In der Praxis kann es vorkommen, dass die genaue Länge des abzuschneidenden Stückes bereits bekannt ist. Es kann aber auch vorkommen, dass - wie oftmals auf der Baustelle - zunächst einmal so viel Kabel von der Rolle abgerollt wird, wie tatsächlich benötigt wird, wenn das Kabel in irgendeiner Weise verlegt wird. Ist der Kabelabschnitt fertig verlegt, kann das Kabel an der entsprechenden Stelle abgeschnitten werden. Meistens ist dann jedoch nicht genau bekannt, wie viel Kabel tatsächlich von der Rolle abgerollt wurde. Mit dem erfindungsgemäßen Messgerät steht in vorteilhafter Weise dieser Messwert jedoch unmittelbar nach dem Abschneiden zur Verfügung. Insbesondere kann vermieden werden, dass das Kabel von Hand nachgemessen werden muss, was insbesondere Schwierigkeiten bereitet, wenn das Kabel bereits verlegt worden ist. Außerdem kann durch das erfindungsgemäße Messgerät eine sehr genaue Messung vorgenommen werden.

Das erfindungsgemäße Messgerät kann eine zeitliche Abfolge von Messdaten aufnehmen, während das Kabel z. B. von einer Rolle abgewickelt wird. Eine zeitliche Abfolge im Sinne der Erfindung kann eine Abfolge zu diskreten Zeitpunkten bedeuten (z. B. einmal pro Sekunde), es kann sich aber auch um eine kontinuierliche Messung handeln. Die Messwerte können dabei abgespeichert bzw. zwischengespeichert werden. Solange das Kabel nur abgewickelt wird, bleibt die Kabellänge konstant, weil die Kabellänge des gesamten Kabelvorrates gemessen wird. In dem Moment aber, in dem das Kabel an einer bestimmten Stelle durchtrennt wird, wird eine Längenänderung festgestellt, sodass in diesem Moment wiederum getriggert wird, dass die Übertragungsvorrichtung entsprechende Messdaten übermittelt.

Je nach Funktionsprinzip können zur Bestimmung der Länge des abgeschnittenen Kabelstücks verschiedene Messdaten bestimmt werden. In der Regel wird nach dem Abschneiden des Kabelstücks der nächste Messwert, also der unmittelbar danach gemessene Wert aufgenommen, sodass die Differenz aus dem vor dem Abschneiden gemessenen Wert und dem nach dem Abschneiden gemessenen Wert die Länge des abgeschnittenen Kabelstücks ergibt. Das Messgerät kann auch mehrere baulich getrennte Komponenten aufweisen, die einzelne Funktionen erfüllen, zum Beispiel eine separate Messvorrichtung und eine separate Auswerteeinrichtung (z. B. ein Smartphone mit einer Auswertungsapp); die Komponenten können wiederum über z. B. eine Drahtlosverbindung untereinander kommunizieren.

Je nachdem, auf weiche Weise die Messdaten aufgenommen wurden, kann nun die Übertragung entsprechend erfolgen: Handelt es sich beispielsweise um eine kontinuierliche Messung, ohne Zwischenspeicherung oder Abspeicherung von Messdaten, so kann in diesem Moment der aktuell gemessene Messwert z. B. übertragen werden. Handelt es sich um eine Abfolge zu diskreten Zeitpunkten, so kann insbesondere der zuletzt gemessene Messwert übertragen werden. In diesem Fall empfiehlt es sich, zumindest den aktuellen bzw. zuletzt aufgenommenen Messwert zwischen zu speichern, weil nicht davon auszugehen ist, dass der Zeitpunkt des Abschneidens des Kabels und der Zeitpunkt der Messung exakt zusammenfallen. Darüber hinaus ist es auch denkbar, dass mehrere Messdaten oder eine Abfolge von gespeicherten Messdaten übertragen werden. Auf diese Weise wird ermöglicht, dass genau im Moment des Abschneidens der Wert zur Verfügung steht und beim Arbeiten kein Zeitverlust entsteht.

Da der Messwert bzw. die Kabellänge in der Regel dafür benötigt wird, eine exakte Rechnung über die Baukosten erstellen zu können, kann der Messwert z. B. an ein Buchhaltungssystem übertragen werden. Die Übertragung kann also an einen Rechner in jeglicher Art und Weise, insbesondere an ein Smartphone, einen Tabletcomputer oder dergleichen übertragen werden. Denkbar ist auch, dass der Wert in sonstiger Weise, z. B. über eine SMS an ein anderes Gerät zur Datenübertragung bzw. ein Telefon geschickt werden. Insbesondere ist es vorteilhaft, wenn der entsprechende Rechner über ein Buchhaltungssystem verfügt oder mit einem Buchhaltungssystem verbunden ist, sodass der Wert gleich in eine Liste eingefügt werden kann, die automatisch in eine Rechnungsstellung eingepflegt wird. Hierdurch kann auch in vorteilhafter Weise unmittelbar der Nachweis geliefert werden, welche Materialien in welchem Umfang verbaut wurden, damit die spätere Rechnungsstellung auch korrekt ist. Darüber hinaus kann auch festgestellt werden, wie viel Material tatsächlich verbaut und wie viel Abfall produziert wurde.

Die Übertragung kann insbesondere automatisch ablaufen, d. h. die Person, die das Kabel abschneidet, muss sich nicht mehr im Einzelnen darum kümmern, dass die Übertragung auch tatsächlich vonstattengeht und muss insbesondere nicht selbst die Versendung vornehmen. Bei der automatischen

Übertragung werden mit der Erkennung der Änderung die zur Bestimmung der Kabellänge notwendigen Messdaten aufgenommen bzw. verarbeitet und zur Übertragung an die Übertragungsvorrichtung weitergeleitet. Es ist allerdings denkbar, dass das Messgerät etwa eine Abfrage, ob der Wert tatsächlich übertragen werden soll, vorsieht, weil auch z. B. der Fall vorkommen kann, dass ein Stück Kabel benötigt wird, ohne dass dies dem Kunden in Rechnung gestellt werden soll.

Bei einer Ausführungsform der Erfindung bestimmt das Messgerät die Kabellänge ab einem bestimmten Messpunkt, mit dem es verbunden ist. Um eine zuverlässige Messung vorzunehmen, kann das Messgerät insbesondere an einem Ende des Kabels bzw. des bevorrateten Kabels angekoppelt sein und somit die Länge des gesamten Kabels messen. Auf diese Art und Weise wird ermöglicht, dass das bevorratete Kabel Stück für Stück aufgebraucht werden kann, bis der gesamte Kabelvorrat aufgebraucht ist. Darüber hinaus ist es, je nachdem, welche Messtechnik zur Bestimmung der Kabellänge angewandt wird, notwendig, das Messgerät an wenigstens eine der Adern bzw. Fasern des Kabels zu koppeln. Über die Länge des Kabels hin könnte dies, je nach Messtechnik, somit bedeuten, dass die Isolierung des Kabels nach außen hin durchbrochen werden müsste.

Besonders vorteilhaft ist es, wenn eine Drahtlosverbindung zur Verfügung steht, um die Übertragung vorzunehmen. Denkbar ist grundsätzlich aber auch, dass das Messgerät mit dem entsprechenden Rechner mittels einer festen Verdrahtung verbunden ist. Die Übertragung kann im drahtlosen Fall z. B. auch über Bluetooth, über WLAN bzw. über proprietäre Funkstandards übertragen werden.

Es kommen verschiedenartige Messtechniken in Betracht. Z. B. kann eine kapazitive Messung benutzt werden, sodass die Leitungslänge über die Faraday'sche Kapazität von bzw. zwischen mindestens zwei Adern bestimmt wird. Denkbar ist auch, dass die Leitungslänge darüber bestimmt wird, dass die Leitung an einen Schwingkreis oder eine sonstige schwingungsfähige elektrisehe Schaltung gekoppelt wird, z. B. auch eine Kippstufe, sodass die Faraday'sche Kapazität der angekoppelten Leitung die Eigenfrequenz der Schaltung ganz oder teilweise bestimmt. Denkbar ist auch, dass eine Laufzeitmessung vorgenommen wird, bei der ein zeitlich verändertes Signal an einem Ende in das Kabel eingespeist wird, welches am anderen Ende des Kabels zumindest teilweise reflektiert werden kann. Eine solche Laufzeitmessung kann sich insbesondere auch dazu anbieten, die Leitungslänge optischer Fasern zu ermitteln. Auch eine induktive Messung ist grundsätzlich möglich. Darüber hinaus ist es grundsätzlich auch denkbar, dass das Messgerät über eine mechanische Zählvorrichtung verfügt, etwa dass das Kabel über ein Laufrad abgewickelt wird und die Zahl der Umdrehungen des Laufrades mitgezählt wird, sodass hieraus definiert eine Länge bestimmt werden kann. Darüber hinaus können auch andere Messtechniken im Allgemeinen hier angewendet werden.

Bei einer Ausführungsform der Erfindung ist es denkbar, dass der Zeitpunkt als Triggerungszeitpunkt für die Übertragung der Messdaten erkannt wird, an dem sich die Länge um oder zumindest um einen bestimmten Wert ändert. Es ist z. B. denkbar, dass nicht mitprotokolliert werden soll, wenn etwa beim Abisolieren kleinere Kabelabschnitte abgetrennt werden müssen, sondern dass nur in dem Protokoll (z. B. zur späteren Rechnungsstellung) Kosten aufgeführt werden, bei denen z. B. größere Kabelstücke abgeschnitten wurden. Dieser Wert kann grundsätzlich beliebig festgelegt werden.

Erfindungsgemäß ist es zunächst vorgesehen, dass eine zeitliche Abfolge von Messdaten aufgenommen wird, und bei einer Änderung dieser Messdaten dieser Zeitpunkt als Triggerung angenommen wird, um eine Übertragung von Messdaten bzw. von einer bestimmten Kabellänge vorzunehmen. Es können, müssen aber gemäß der Erfindung nicht alle Messdaten, die in dieser zeitlichen Abfolge aufgenommen werden, unbedingt der Bestimmung der Kabellänge dienen. Bei einer Weiterbildung der Erfindung, die insbesondere für Kabel mit mindestens zwei Adern gedacht ist, kann auch als zusätzliche Messdaten bestimmt werden, ob eine elektrische Verbindung zwischen wenigstens zwei Adern vorliegt. Da die Adern in der Regel gegeneinander isoliert sind, ist dies im Normalzustand bei einem intakten Kabel nicht der Fall. Wird aber das Kabel durchgeschnitten, wird in der Regel eine Verbindung zwischen den wenigstens zwei Adern zumindest kurzzeitig hergestellt, wenn beispielsweise der verwendete Seitenschneider die Isolierung durchtrennt und mit beiden Adern in Kontakt gerät. Diese elektrische Verbindung kann auf verschiedene Art und Weise bestimmt werden. Beispielsweise kann der Ohm'sche Widerstand bestimmt werden, der im Normalfall unendlich hoch ist und aber dann, wenn das Kabel durchgeschnitten wird, auf einen endlichen Wert absinkt, insbesondere gegen Null geht. Denkbar ist auch, dass eine kapazitive Messung vorgenommen wird. Der Vorteil einer solchen Messmethode kann darin liegen, dass die Bestimmung des Zeitpunktes, an dem das Durchschneiden des Kabels erfolgt, zunächst entkoppelt ist von der eigentlichen Messung der Kabellängen.

Je nachdem, welche Messtechnik verwendet wird, kann das Ereignis des Durchschneidens des Kabels dazu führen, dass genau in diesem Moment die Kabellängenmessung für einen Augenblick unzuverlässig ist. Für die Übermittlung soll aber selbstverständlich die korrekte Kabellänge verwendet werden, also z. B. die Differenz kurz vor dem Ereignis des Abschneidens und kurz nach dem Ereignis des Abschneidens. Da aber der Zeitpunkt des Abschneidens willkürlich ist und darüber hinaus auch der Zeitraum, über den der Abschneidevorgang verläuft, nicht immer völlig konstant ist, ist es vorteilhaft, dass das Messgerät so eingestellt ist, dass zuverlässig ein Wert übertragen wird, der nicht genau in der Zeitspanne des Abschneidens gemessen wurde und somit eventuell deutlich fehlerbehaftet ist.

Um dies zu gewährleisten, d. h. um zu ermöglichen, dass ein zuverlässiger Wert der Messung auch zur Verfügung steht, wenn das Ablängen des Kabels kurz nach dem Messvorgang vorgenommen wurde, kann insbesondere bei einer Ausführungsvariante der Erfindung ein Speicher zum Speichern wenigstens eines Teils des Verlaufs der zeitlichen Abfolge der Messdaten und/oder der bestimmten Kabellängen vorgesehen sein. Durch einen derartigen Speicher kann aber auch der zeitliche Verlauf mitprotokolliert werden, sofern es z. B. gewünscht ist, den zeitlichen Verlauf der Messung zu kennen. Denkbar ist z. B., dass im Speicher abgelegt und mitprotokolliert wird, zu welchen Zeitpunkten über einen bestimmten Zeitraum hinweg wie viel Kabel benötigt wurde, sodass diese Daten im Handwerksbetrieb auch unabhängig von der jeweiligen Rechnungsstellung zur Verfügung stehen. Bei einem Speicher kann es sich, je nach Verwendungszweck, um einen dauerhaften Speicher oder einen flüchtigen Speicher handeln. Ein flüchtiger Speicher ist z. B. dann vorteilhaft, wenn die Daten lediglich zwischengespeichert werden sollen, also wenn beispielsweise nur der zuletzt gemessene Messwert interessant ist, bis er durch einen neuen Messwert ersetzt wird.

Grundsätzlich kann es sich bei solchen Messgeräten gemäß der Erfindung bzw. bei entsprechenden Ausführungsbeispielen um separate Vorrichtungen handeln. Darüber hinaus ist es denkbar, das Messgerät als Bestandteil einer Vorrichtung zum Bevorraten und Ablängen von Kabeln vorzusehen. Das Messgerät kann in eine solche Vorrichtung integriert sein oder auch lösbar an die Bevorratungsvorrichtung angedockt werden. Entsprechend könnte die Vorrichtung zum Bevorraten und Ablängen von Kabeln etwa eine Kabelrolle, insbesondere eine Kabeltrommel und ein Messgerät umfassen. Unter einer Kabelrolle ist im vorliegenden Fall ein Vorrichtung zu verstehen, die einen Bestand an einem solchen Kabel aufgenommen hat.

Es ist vorteilhaft, wenn das Messgerät gemäß einem Ausführungsbeispiel der Erfindung über eine Energieversorgung verfügt, die nicht an das Stromnetz gebunden ist, weil nur so die Freiheit ermöglicht wird, sich frei auf der Baustelle bewegen zu können. Damit zudem nicht wie bei einer Batterie die Spannungsquelle ständig gewechselt werden muss, ist es vorteilhaft, das Messgerät über einen Akkumulator als Energiequelle zu betreiben. Bei einer besonders bevorzugten Weiterbildung der Erfindung kann dieser Akkumulator auch über das zu vermessende Kabel geladen werden. Diese Verbindung kann über einen Schalter oder eine Schaltung erfolgen, damit ein Umstecken der Verbindung zwischen dem Messbetrieb und dem Ladebetrieb nicht erfolgen muss. Über einen Schalter oder eine Schaltung kann dann, z. B. über Nacht, das Gerät zum Aufladen an eine Spannungsquelle bzw. ans Netz angeschlossen werden.

Eine Schaltung kann dazu ausgebildet sein, selbstständig zu erkennen, ob eine externe Spannung zum Aufladen anliegt oder nicht. Es kann ein Ladegerät zwischengeschaltet sein, das über das Netz bzw. eine sonstige Spannungsquelle versorgt wird und sodann den Akkumulator selbstständig auflädt.
Bei einer Weiterbildung der Erfindung kann das angeschlossene, zu vermessende Kabel aber auch als Antenne genutzt werden, sodass die Übertragungsvorrichtung insbesondere diese Antenne nutzen kann. Vor allem kann dadurch vermieden werden, dass Signale (z. B. Bluetooth) durch das bevorratete Kabel (etwa auf einer Kabelrolle) zu stark gedämpft werden, insbesondere, wenn das Messgerät zum Beispiel im Inneren einer Kabeltrommel angeordnet ist.
Durch diese Maßnahme kann aber auch ermöglicht werden, langreichweitigere Übertragungen vorzunehmen. Für die Antenne kann insbesondere ein Verstärker vorgesehen sein, damit ein ausreichendes Signal zur Verfügung steht. Durch die zuletzt genannten Ausführungsbeispiele kann insbesondere erreicht werden, dass weitere Bauteile, insbesondere auch Kabel, eingespart werden.

Mit der vorliegenden Anmeldung wird ebenfalls ein Verfahren zum Bestimmen von Kabellängen beansprucht.
Das erfindungsgemäße Verfahren kann beispielsweise zum Bestimmen von Teilstücken bzw. Kabelabschnitten eingesetzt werden, welche von Kabeln abgeschnitten werden, die von Trommel, einem Ringen oder einer Rolle abgerollt werden.

Im Rahmen des erfindungsgemäßen Verfahrens werden die im unabhängigen Anspruch 9 definierten Schritte ausgeführt.

In einem möglichen weiteren Verfahren (nicht als solches beansprucht) werden folgende Verfahrensschritte durchgeführt:
1. Anbringung des Messgerätes an dem zu messenden Kabel bzw. der Kabeltrommel;
2. Kalibrierung des Messgerätes zur Feststellung der Ist-Länge des Kabels;
3. Messung durchführen
4. Abtrennen (=Ablängen) eines Kabelstückes von dem Kabel und Erkennung des Abtrennvorganges anhand von Messdaten (z.B. elektrischen Parametern)
5. Ermittlung der Länge des abgeschnittenen Kabelstücks ΔL aufgrund der Messdaten (z.B. elektrischen Parametern);
6. Protokollierung und Speicherung der Messdaten.

Wichtig ist, dass die Feststellung der Kabellänge entweder durch das Messgerät oder eine Auswerteeinheit erfolgt, welche über den zeitlichen Verlauf Messdaten ermittelt, die mit der Kabellänge in einem Zusammenhang stehen. Das Messgerät kann hierfür beispielsweise:
- die elektrische Kapazität (SI-Einheit Farad (1F)) oder
- die Laufzeit messen.

Im Rahmen der Laufzeitmessung findet eine Messung der Zeit statt, die ein Signal benötigt die Messstrecke (=Kabellänge) zu durchqueren. Hieraus wird dann die Gesamtlänge des Kabels berechnet.

Der erfolgte Abtrennvorgang des Kabelstücks von dem Kabel kann z.B. durch folgende Faktoren erkannt werden:
- Aufgrund eines Kurzschlusses zwischen zwei Leitungsdrähten, welcher durch den mechanischen Seitenschneider hervorgerufen wird;
- Der Seitenschneider weist eine Vorrichtung auf, welche dem Messgerät bzw. der Auswerteeinheit einen Impuls für die Ermittlung der Messdaten gibt;
- Der Monteur bzw. Elektriker bestätigt manuell am Messgerät bzw. der Auswerteeinheit, dass ein Ablängvorgang stattgefunden wird bzw. stattgefunden hat;

Die Messung der Ist-Länge des Kabels erfolgt hierbei periodisch.

Bei einer weiteren bevorzugten Ausführungsform ist die Messperiodendauer für die Aufnahme der Messdaten abhängig davon, ob die Kabeltrommel bzw. das Kabel bewegt wird oder nicht. Dies bedeutet, dass wenn sich die Kabeltrommel in Ruhe befindet eine längere Messperiode zwischen dem Erfassen der Messdaten vorliegt, als wenn die Kabeltrommel bewegt wird. So können beispielsweise bei einer Ruheperiode die Zeitabstände 60 Sekunden betragen, während bei einer aktiven Bewegung der Kabeltrommel die Messdaten innerhalb von 300 Millisekunden aufgenommen werden.

Bei einer bevorzugten Ausführungsform werden der Abtrennvorgang des Kabelstückes und die Länge des Kabelstückes durch eine Änderung der Kapazität im Kabel festgestellt. Die Messung der Kapazität erfolgt stets nur im Kabel, welches auf z.B. einer Rolle vorhanden ist und von dem einzelne Kabelstücke abgetrennt werden. Entscheidend ist, dass durch den Ablängvorgang eine Kapazitätsänderung eintritt. Nach dem Abtrennen des Kabelstücks wird dieses weiterverarbeitet, während das verbleibende Kabel vorerst nicht weiter bewegt wird. Diese Ereignisse können durch eine elektrische Kapazitätsmessung festgestellt werden. Ausschlaggebend für den vermuteten Abtrennvorgang sind die starken Kapazitätsänderungen während des Abtrennvorganges und die anschließende Ruhephase im Kabel. Das Aufeinanderfolgen dieser beiden Ereignisse wird von dem Messgerät bzw. von der Auswerteeinheit als Ablängvorgang klassifiziert, wobei anhand von mindestens zwei Kapazitätswerten (=Messdaten) auf die Länge des Kabelstückes ΔL geschlossen wird. Das Messgerät und/oder die Auswerteeinheit werten die mindestens zwei Messdaten aus, wobei von dem zuletzt gespeicherten Kapazitätswert des Kabels (=Gesamtlänge des Kabels) der neue Kapazitätswert (Ist-Länge) des Kabels abgezogen wird und dadurch auf die Länge des Kabelstückes ΔL geschlossen wird.

Um den Abtrennvorgang eindeutig festzustellen, müssen stets die beiden Ereignisse (Bedingungen) vorliegen:
1. Durchtrennen des Kabels = starke Schwankung der Messdaten (z.B. starke Kapazitätsänderungen)
2. Liegenlassen den Kabels = Ruhephase

Wichtig ist, dass stets nur eine Messung des (Vorrats-) Kabels vorgenommen wird. Eine zusätzliche Messung des abgetrennten Kabelstückes ist nicht notwendig

In einem weiteren bevorzugten Ausführungsbeispiel ist es möglich, dass durch eine Laufzeitmessung die Kabellänge festgestellt wird. Hierzu wird ermittelt, wie lange ein elektrisches Signal braucht ein Kabel zu durchwandern und wieder zurück zum Messgerät zu gelangen. Die Zeit wird in ein Längenmaß umgewandelt, basierend auf der Geschwindigkeit, die das zur Längenmessung gesendete Signal braucht, um das Kabel zu durchqueren und wieder zurück zu kommen. Darüber hinaus kann mit dem Verfahren festgestellt werden, ob die Leitung am anderen Ende offen oder kurzgeschlossen ist. Bei einem offenen Ende kommt das Signal so zurück, wie es abgeschickt wurde. Bei einem Kurzschluss ist es invertiert.

Die Laufzeit- bzw. Längenmessung kann beispielsweise mit einem vektoriellen Netzwerkanalyzer durchgeführt werden. Dieser ist geeignet die Laufzeit für ein Stück Kabel in Abhängigkeit von der mechanischen Länge und dem Material des Dielektrikums (ε) festzustellen.

Im Rahmen des TDR-Verfahrens (Time domain reflectrometry) wird die Zeit gemessen, die ein ausgesandter Impuls bis zu seinem Wiedereintreffen nach der Reflexion benötigt. Ist die Ausbreitungsgeschwindigkeit im Kabel bekannt, die vom Dielektrikum abhängt, so kann man von der gemessenen Zeit direkt auf die Länge des Kabels zurückschließen.

Es ist ferner auch möglich die Kabellänge mit Hilfe der optischen Zeitbereichsreflektometrie (Optical-Time-Domain-Reflectometry kurz OTDR) festzustellen. Dies ist ein Verfahren zur Ermittlung und Analyse von Lauflängen und Reflexionscharakteristika von elektromagnetischen Wellen und Signalen im Wellenbereich des Lichts.

Die ermittelte Länge des Kabelstückes ΔL wird bevorzugt direkt auf einem Display des Messgerätes, auf der Auswerteeinheit, auf einem Smartphone oder einer anderen externen Anzeigevorrichtung angezeigt. Es ist ferner möglich, dass das Messgerät und/oder die Recheneinheit das Erkennen des Abtrennvorganges durch ein akustisches und/oder optisches Signal bestätigt. Dadurch können Vorort mögliche Fehlmessungen reduziert bzw. verhindert werden.

Bei einer weiteren bevorzugten Ausführungsform findet eine Messdatenerfassung statt, indem das Kabel entlang des Messgerätes geführt wird. Es ist ferner möglich eine kabellose, nicht-galvanische Ermittlung der Kabellänge durch z.B. eine Signaleinkoppelung (induktiv oder kapazitiv) durchzuführen. Auch kann die Erfassung der Messdaten durch einen induktiven Wirbelstromsensor erfolgen, welcher eine Veränderung des magnetischen Feldes im Kabel feststellt.

Die Längenmessung des Kabels kann beispielsweise anhand des Verkürzungsfaktors stattfinden. Der Verkürzungsfaktor VKF (auch NVP (=Nominal Velocity of Propagation)) ist eine dimensionslose Kennzahl von Leitungen. Verschiedene Kabel haben verschiedene elektronische Eigenschaften, die sich auf die Messung der Länge auswirken, und wodurch die Geschwindigkeit mit der das Signal das Kabel durchwandert, variiert (NVP). NVP ist die relative Geschwindigkeit mit der das Signal durch das Medium im Kabel an dem die Länge gemessen wird durchwandert. Um eine genaue Längenmessung durchzuführen, muss vorher der korrekte NVP angeben werden. Dieser Wert befindet sich entweder auf der Verpackung des Kabels, oder ist auf der Homepage des Kabelherstellers angegeben. Bevorzugt ist der NVP-Wert für die unterschiedlichen Kabeltypen bereits in der erfindungsgemäßen Recheneinheit bzw. dem Messgerät hinlegt, so dass er für die Längenmessung lediglich aus einer Tabellen bzw. Übersicht ausgewählt werden muss.

Bei einer Ausführungsform der Erfindung ist es denkbar, dass von dem Messgerät getaktet Messdaten erfasst und an die Recheneinheit gesandt werden. Der Ankunftszeit der Messdaten an der Recheneinheit wird als Erhebungszeitpunkt angenommen. Die Recheneinheit kann nun anhand von bestimmten, bekannten Ereignissen (hohe Schwankungen, Ruheperiode) eine Ablängvorgang feststellen und durch die damit verknüpften Messdaten die gewünschte Länge des Kabelstückes feststellen.

Entscheidend bei allen Ausführungsformen ist, dass das Messgerät hinsichtlich des zumessenden Kabels vorher kalibriert werden muss. Durch die Kalibrierung kann dann das Messgerät die Ist-Länge des Kabels messen.
Für den Kalibrierungsvorgang gibt es verschiedene Möglichkeiten, wie z.B.:
1. Die Kabellänge ist bekannt. Aus der bekannten Länge und den Messwerten kann bei einem bekannten Zusammenhang zwischen den Beiden der unbekannte Parameter (z.B. Kapazität) bestimmt werden.
2. Die elektrischen Eigenschaften des zu messenden Kabels sind bekannt (z.B. 28 Mikrofarad (µF)/ Meter). Anhand des Wertes und einem bekannten Zusammenhang zwischen Parameter(n) und Messwerten kann nun auf die Gesamtlänge des Kabels geschlossen werden.
3. Es wird ein anderweitig mit z.B. einem Zollstock vermessen. Hierzu wird ein Abschnitt (z.B. 1 Meter) von dem zu messenden Kabel abgeschnitten und die Messdaten hierfür ermittelt. Im Anschluss daran kann auf die Gesamtlänge des Kabels geschlossen werden.

Für das Messverfahren und das Feststellen eines Ablängvorganges sind folgende Verfahrensschritte möglich:
1. Anbringung des Messgerätes an dem Kabel bzw. an der Kabeltrommel
2. Kalibrierung des Messgerätes hinsichtlich des zu messenden Kabels;
3. Messung der Messgrößen bzw. Messwerte;
4. Feststellung einer Durchtrennung des Kabels anhand von zwei nacheinander folgenden, bekannten Ereignissen, welche aus einer starken Schwankung des Messdaten und einer anschließenden Ruhephase bestehen;
4. Ermittlung der Länge des Kabelstückes aufgrund mindestens eines Messwertes vor dem Ablängvorgang und mindestens einem Messwert nach dem Ablängvorgang.

Im Anschluss an die Ermittlung (Schritt 4) setzen das Messgerät und/oder die Auswerteeinheit einen neuen Messwert für die aktuelle Ist-Länge des Kabels. Dieser Wert kann dann für die Ermittlung des nächsten Kabelstückes herangezogen werden.

Bei einer weiteren bevorzugten Ausführungsform kann dem abgeschnittenen bzw. abgelängten Kabelstück zusätzliche Eigenschaften zugeordnet werden. Dies kann beispielsweise eine Raum- oder Wandnummer sein, durch welche die exakte Position des Kabelstückes feststellbar ist. Die Eingabe bzw. Zuordnung einer Eigenschaft zu dem jeweiligen Kabelstückes erfolgt entweder durch eine Eingabe auf einem Touchscreen des Messgerätes bzw. der Recheneinheit, auf einem Smartphone oder per Spracheingabe.

Bei einer weiteren bevorzugten Ausführungsform ist auf der Auswerteeinheit bereits ein Raumplan (Grundriss) hinterlegt. Dadurch ist es einfach, das aktuell abgelängte Kabelstück dem jeweiligen Einbauort zu zuweisen. Darüber hinaus kann auf dem Touchscreen durch die Eingabe von zwei Punkten die genaue Lage bzw. Positionierung des Kabelstückes im Raum angegeben werden.

Bei einer weiteren bevorzugten Ausführungsform ist auf der Auswerteeinheit eine Kabelzugliste aufgespielt, sodass der Monteur bzw. der Elektriker nur zu dem gewünschten einzubauenden Kabel die jeweilige Länge bzw. den jeweiligen Wert zuweisen muss.
Selbstverständlich kann die Auswerteeinheit kabellos oder kabelgebunden beispielsweise per LAN bzw. W-LAN eine Datenübertragung auf den Betrieb bzw. auf den Computer des Auftraggebers übertragen. Ferner ist es möglich, dass die Auswerteeinheit selbst sofort eine Rechnungserstellung vornimmt und diese Rechnung an den Auftraggeber absendet.

Bei einer weiteren Ausführungsform der Erfindung ist es denkbar, dass das Messgerät bzw. die Übertragungsvorrichtung mit dem zu vermessenden Kabel verbindbar ist, sodass das Kabel als Antenne zur Übertragung der Messdaten genutzt werden kann. Vorteilhaft ist dann noch ein Verstärker bzw. eine geeignete Anpassungsschaltung zwischengeschaltet. Die Kabeltrommel zusammen mit dem Messgerät befindet sich hierbei beispielsweise im Erdgeschoss eines Hauses, wobei der Elektriker bzw. der Monteur im Keller arbeitet und das Kabel bis dorthin abgerollt hat. Im Keller besteht jedoch kein Empfang für eine kabellose Datenübertragung zwischen der Auswerteeinheit dem Messgerät und der Auswerteeinheit. Erfindungsgemäß findet nun eine Übertragung der Messdaten über das Kabel in das Erdgeschoss zu der Auswerteeinheit statt. Das Kabel wird somit als Antenne bzw. zur Datenübertragung benutzt.
Bei einer weiteren Ausführungsform befindet sich auf einem Tablet-PC bzw. auf der Recheneinheit eine spezielle Anwendungssoftware (kurz.App). In einem ersten Verfahrensschritt sucht die App das jeweilige Messgerät, welches bevorzugt mit einer Übertragungsvorrichtung ausgestattet ist. Die einzelnen Messgeräte sind mit unterschiedlichen Identifikationsnummern ausgestattet, sodass diese leicht ermittelt werden können. Selbstverständlich können mit der Anwendungssoftware mehrere Messgeräte gleichzeitig bearbeitet werden. Zur leichten Erkennung des jeweiligen Messgerätes bzw. zur leichten Eingabe und Zuweisung besitzt jedes Messgerät einen QR-Code, welche von der Auswerteeinheit eingescannt wird. Das Kabel kann ferner ebenfalls einen QR-Code aufweisen, so dass auch hier eine leichte Aufnahme in die Anwendungssoftware möglich ist. Ferner sind in der App zahlreiche Kabeltypen bereits hinterlegt, welche per Touchscreen ausgewählt werden können. In einem nächsten Verfahrensschritt folgen nun die Zuweisung des Kabeltyps und/oder die Kalibrierung des Messgerätes hinsichtlich Kabeltyps. Danach kann mit dem Kabel gearbeitet und das gewünschte Kabelstück abgelängt werden.

Bevorzugt erkennt die App bzw. die Auswerteeinheit sofort einen dauerhaften Kurzschluss zwischen Leitungsdrähten im Kabel und zeigt diese akustisch und/oder optisch an. Solch ein Kurzschluss kann beispielsweise entstehen, wenn aufgrund eines unsauberen Ablängvorganges mit dem Seitenschneider zwei Kupferkabel in Berührung kommen und sich dadurch die Kapazität ändert, wodurch die Auswerteeinheit eine Längenzunahme statt eine Längenabnahme des Kabels erkennt. Im Anschluss daran muss nun lediglich der letzte Abschnitt noch einmal sauber abgeschnitten werden, wodurch wieder ein plausibler Messwert vorliegt, welcher der eigentlichen Kabellänge entspricht.

Folgende Verbindungsmöglichkeiten bestehen zwischen dem Messgerät und der Auswerteeinheit:
1. Das Messgerät ist an dem Kabel angeschlossen. Zwischen dem Messgerät und der Auswerteeinheit besteht eine drahtlose Verbindung;
2. Das Messgerät und die Auswerteeinheit bilden eine Einheit aus;
3. Das Messgerät und die Auswerteeinheit bilden eine Einheit aus, wobei die Auswerteeinheit eine drahtlose Verbindung zu einer weiteren Auswerte- oder Recheneinheit aufweist.

### Ausführungsbeispiele

Ausführungsbeispiele der Erfindung sind in den Zeichnungen dargestellt und werden nachstehend unter Angabe weiterer Einzelheiten und Vorteile näher erläutert.

Im Einzelnen zeigen
Fig. 1: eine Kabeltrommel mit einem Messgerät gemäß der Erfindung,
Fig. 2: eine Vorrichtung zum Bevorraten und Ablängen von Kabeln gemäß der Erfindung,
Fig. 3: eine Vorrichtung zum Bevorraten und Ablängen von Kabeln gemäß der Erfindung mit implementierter Antennenfunktion,
Fig. 4: eine Vorrichtung zum Bevorraten und Ablängen von Kabeln gemäß der Erfindung mit integrierter Ladefunktion, sowie
Fig. 5: eine schematische Darstellung des Messgeräts aus Fig. 3
Fig.6: eine schematische Darstellung des Anschlusses des erfindungsgemäßen Messgerätes an einem Kabel
Fig.7 zeigt schematisch den Querschnitt eines Kabels mit zwei Leitern
Fig. 8 zeigt eine schematische Darstellung der Messdaten vor, während und nach dem Ablängvorganges
Fig.9 zeigt eine schematische Darstellung des erfindungsgemäßen Messverfahrens
Fig. 10 zeigt eine weitere, schematische Darstellung des erfindungsgemäßen Messverfahrens

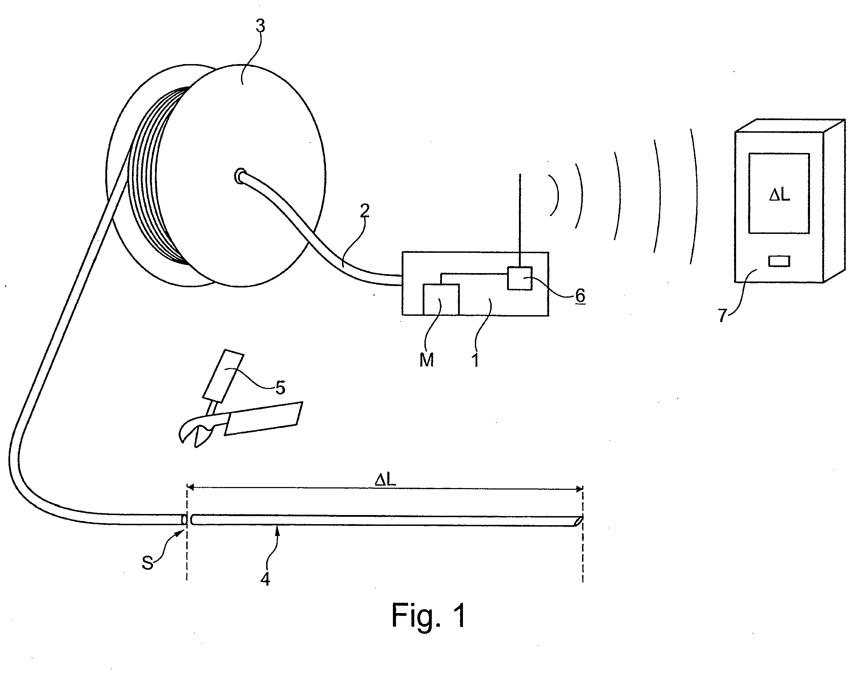

Fig. 1 zeigt ein Messgerät 1 zum Bestimmen von Kabellängen. Das Messgerät 1 ist an das Ende eines Kabels 2 angeschlossen, welches auf einer Kabeltrommel 3 aufgewickelt ist. Um ein Kabelstück 4 einer Länge ΔL von der Kabelrolle 3 zu bekommen, wird das andere, nicht mit dem Messgerät 1 verbundene Ende des Kabels 2 abgewickelt und entsprechend mit einem Seitenschneider 5 durchschnitten. In der Regel ist auf einer Baustelle die Länge ΔL nicht genau vorher bekannt. Das Kabel 2 wird abgewickelt und verlegt und erst dann, wenn genügend Kabel entnommen wurde, mit dem Seitenschneider 5 abgeschnitten. Das Messgerät 1 misst zunächst die gesamte Länge des Kabels 2. Diese Länge beträgt in Fig. 1 eine Strecke L, also die Gesamtlänge des Kabels. Diese Länge wird vom Messgerät 1, das mit dem Kabel 2 verbunden ist, gemessen und über Übertragungsvorrichtung 6 mit Antenne bzw. über Bluetooth einem Smartphone 7 mitgeteilt. Das Smartphone 7 enthält eine App, in welcher der Materialverbrauch auf der Baustelle mitprotokolliert werden kann. Die Übertragung der Länge des Kabelstücks 4 erfolgt automatisch über Funk und wird in die entsprechende Liste mit aufgenommen. Am Ende der Bauarbeiten stehen somit vollständig die Daten über den Materialverbrauch zur Verfügung und können automatisch z. B. von einem Datenverarbeitungssystem verarbeitet werden, sodass schließlich eine Rechnung generiert werden kann.

Wie in Fig. 1 dargestellt, ist das Kabel 2 an der Stelle S bereits durchtrennt, sodass das Messgerät 1 nunmehr eine Länge L minus ΔL misst. Dieser Unterschied ΔL wird per Funk vom Messgerät 1 an das Smartphone 7 übertragen, das entsprechend Fig. 1 nunmehr ΔL als Kabellänge anzeigt. Die gemessenen Daten werden in einem Speicher M zwischengespeichert. Wird das (zweiadrige) Kabel 2 mit dem Seitenschneider 5 durchtrennt, entsteht eine leitende Verbindung zwischen beiden Adern, aber nur für den kurzen Moment des Abschneidens. Diese Änderung wird vom Messgerät 1 erkannt, sodass die zuletzt im Speicher M hinterlegte Kabellänge L um den nach der Änderung gemessenen Wert L minus ΔL verringert wird, sodass also der Wert ΔL übertragen werden kann.

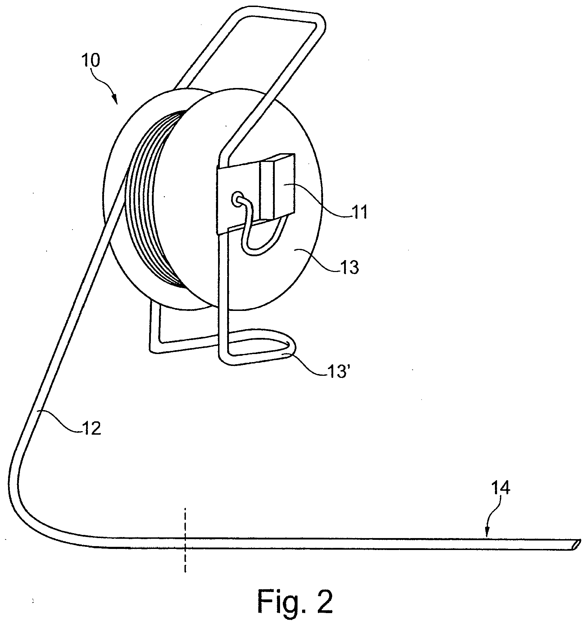

Fig. 2 zeigt eine Vorrichtung 10 zum Bevorraten und Ablängen von Kabeln, bei der das Messgerät 11 bereits integriert ist. Ein Kabel 12 ist dazu auf einer Kabeltrommel 13 aufgewickelt. Die Kabeltrommel 13 ist auf einem Ständer 13' gelagert, wobei das Messgerät 11 an dem Ständer 13' befestigt ist. Ein Ende des Kabels 12 ist im Bereich der Achse der Kabeltrommel 13 gelagert und so hindurchgeführt, dass die Kabeltrommel gedreht werden kann, ohne durch das Kabelende blockiert zu werden. Das Kabelende wird dann außen mit dem Messgerät 11 verbunden. Darüber hinaus ist die Funktionsweise des Messgerätes 11 die gleiche wie im Fall von Fig. 1, d. h. es kann auch hier entsprechend ein Ende 14 des Kabels 12 abgetrennt werden, und der Messwert dieser Länge steht später zur Verfügung und kann z. B. an einen Rechner übertragen werden.

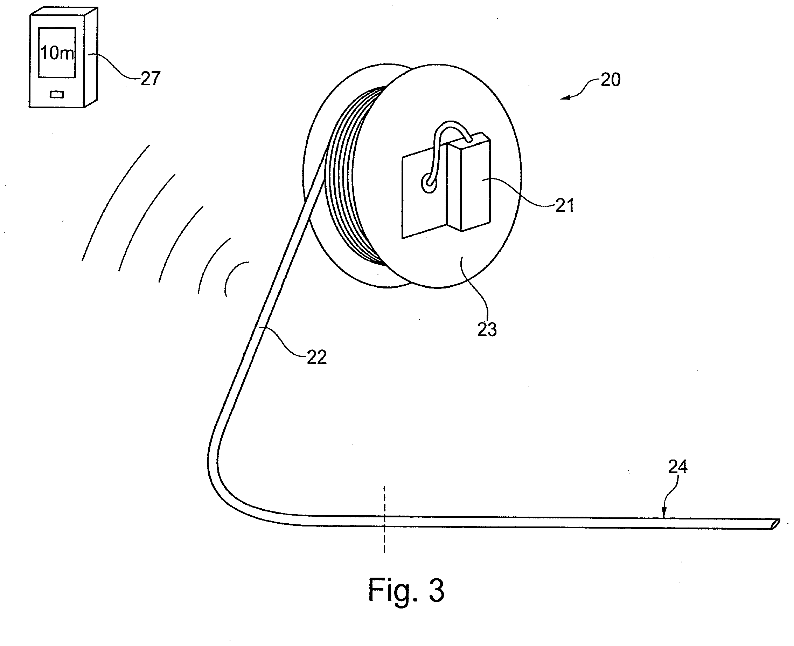

Fig. 3 zeigt eine Vorrichtung 20 zum Bevorraten und Ablängen von Kabeln mit einem Messgerät 21, wobei ein Kabel 22 auf einer Kabeltrommel 23 bevorratet ist. Der Einfachheit halber ist das Messgerät 21 so dargestellt, dass es an der Kabeltrommel 23 angebracht ist. Ob die Kabeltrommel 23 frei drehbar gelagert ist, ist grundsätzlich im vorliegenden Fall nicht von Bedeutung. Das Messgerät 21 verfügt über die Möglichkeit, eine Funkübertragung der Messdaten vorzunehmen, und zwar über das Kabel 22 als Antenne. Auch hier kann entsprechend das andere Ende 24 des Kabels 22 abgetrennt werden. Ist dies geschehen, so wird die Länge des Kabelstückes 24 wiederum an einen Empfänger 27 übermittelt. Diese drahtlose Übertragung per Funk geschieht in der Weise, nach der Messung und dann, wenn eine Änderung bei den Messdaten festgestellt wurde, mit welcher die Übertragung getriggert wird, ein zu übertragendes Signal über das Kabel 22, das zur Messung bereits mit dem Messgerät 21 verbunden ist, übertragen wird. Der Empfänger 27 empfängt dieses Signal und verfügt über ein Programm, das den entsprechenden Wert anzeigt und zur weiteren Datenverarbeitung abspeichern kann.

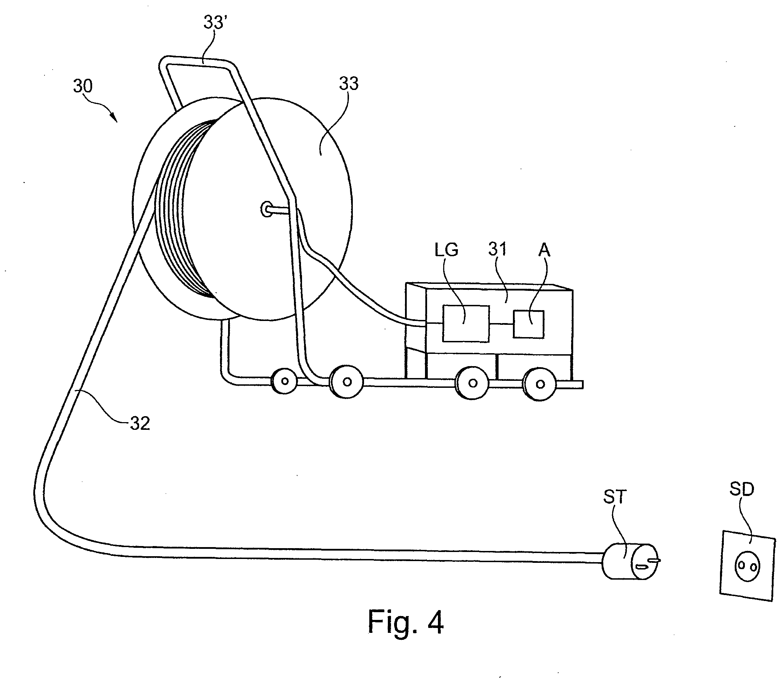

Fig. 4 zeigt seine Vorrichtung 30 zum Bevorraten und Ablängen von Kabeln mit einem Messgerät 31, einer Kabeltrommel 33 zum Bevorraten eines Kabels 32, wobei Messgerät und Kabeltrommel 33 auf einem verfahrbaren Gestell 33 gelagert sind. Das Messgerät 31 wird über einen Akkumulator A mit Energie versorgt. Bei Bedarf, wenn auf der Baustelle kein Betrieb ist, kann der Akkumulator A somit aufgeladen werden. Zum Aufladen ist in das Messgerät 31 ein Ladegerät LG integriert. Dieses Ladegerät kann grundsätzlich aber auch getrennt vom Messgerät zur Verfügung gestellt werden. Das Messgerät 31 wird umgestellt, sodass ein Ladebetrieb des Akkumulators vorgenommen werden kann. Zum Aufladen wird das Kabel 32 genutzt, das mit einem Stecker ST verbunden wird und sodann in eine Steckdose SD gesteckt werden kann. Im vorliegenden Fall handelt es sich bei dem Kabel 32 um ein entsprechendes 230-V-Kabel mit zwei Adern für Phase und Null sowie einer dritten für die Erdung. Denkbar ist aber auch, dass z. B. im Niedervoltbereich das Kabel mit einem Adapter verbunden und an ein Netzgerät, das z. B. eine niedrigere Gleichspannung zur Verfügung stellt, angeschlossen werden kann.

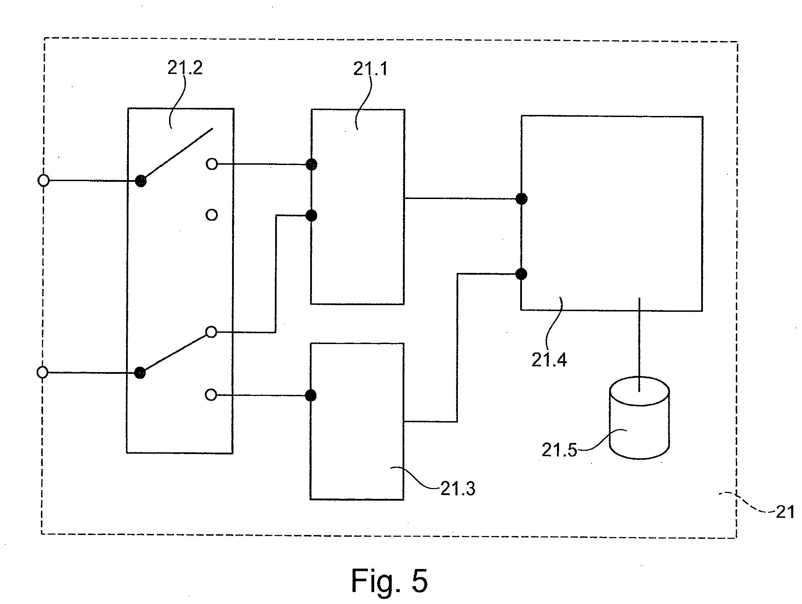

Fig. 5 zeigt eine schematische Darstellung des Messgerätes 21 aus Fig. 3. Die Eingänge des Messgerätes 21 gehen zunächst auf eine Weiche 21.2. Zum einen ermöglicht die Weiche 21.2, dass die Eingänge auf die eigentliche Messvorrichtung 21.1 gegeben werden, so dass hier die Messung einer Kabellänge erfolgen kann. Zur weiteren Verarbeitung kann die Messvorrichtung 21.1 mit einer Recheneinheit 21.4 verbunden sein, gegebenenfalls mit Speicher 21.5. Die Recheneinheit 21.4 kann z. B. zur weiteren Auswertung der Messdaten genutzt werden, z. B. wenn sich die zu bestimmenden Kabellänge als Differenz zweier gemessener Längen ergibt. Über die Recheneinheit 21.4 kann auch die Weiche 21.2. gestellt werden, wenn die Recheneinheit 21.4 eine entsprechende Kontrolleinheit aufweist und zum Beispiel über eine Steuerleitung 21.6 mit der Weiche 21.2 verbunden ist. Ebenfalls vorgesehen ist die Übertragungseinheit 21.3 mit einer Anpassungsschaltung, so dass die Daten der Recheneinheit 21.4 an die Übertragungseinheit 21.3 weitergegeben und von dort übertragen werden können

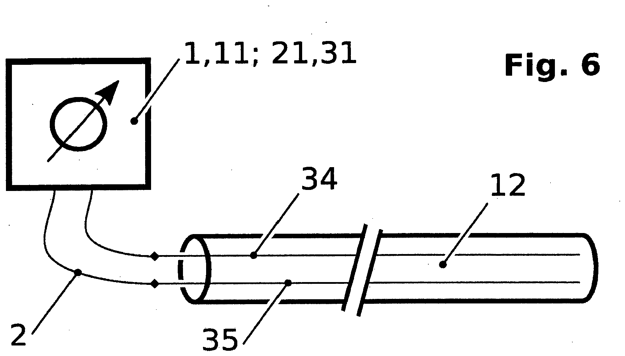

Mit der Figur 6 wird schematisch ein Anschluss des Messgerätes 1,11,21,31 an zwei Leitern 34, 35 eines Kabels 2, 12 gezeigt. Das Messgerät 1 kann entweder direkt mit dem Kabel 2, 12 oder über eine zusätzliche Verbindung mit dem Kabel 2, 12 verbunden sein.

Das Kabel 12 besteht aus zwei Leitern 34, 35, deren Abstand wenige Millimeter beträgt. Die Fläche (Größe) dieser Leiter 34, 35 nimmt mit der Länge des Kabels 12 zu. Das Kabel 12 weist zwischen den beiden Leitern 34,35 eine Kapazität auf, die von der Bauform des Kabels (Leiterabstand) sowie der Kabellänge abhängt.

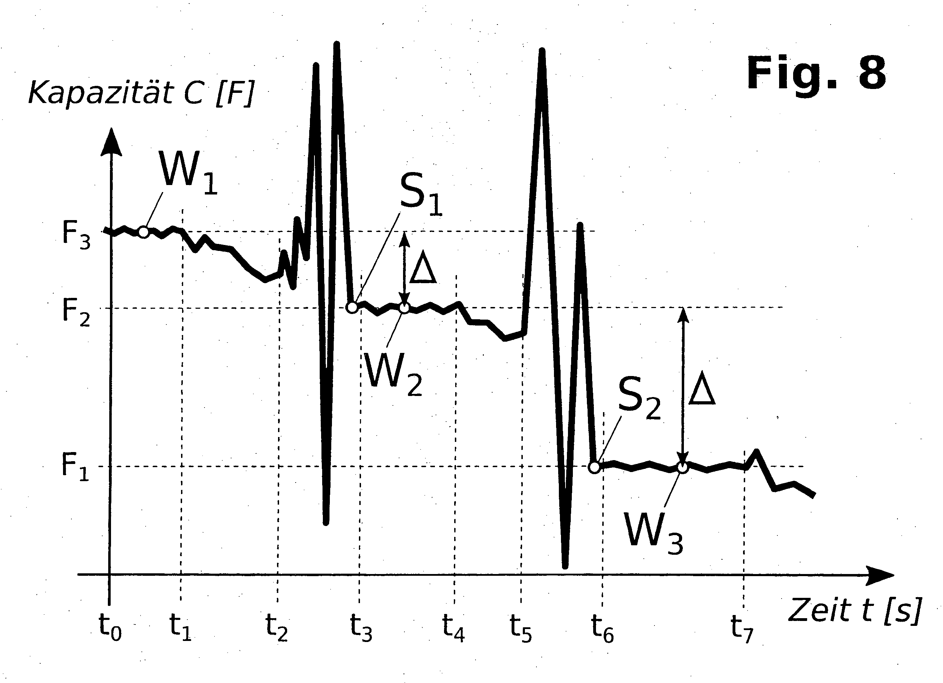

Die zwei Leiter 34,35, die durch ein Isolationsmaterial (Dielektrikum) elektrisch voneinander getrennt sind, bilden einen Kondensator. Die Kapazität des Kondensators ist umso größer, je größer die beiden Leiter sind, und je dichter sie beieinander liegen. Durch eine Bewegung des Kabels 12 bewegen sich die Leiter 34, 35, so dass sich die Kapazität ändert. Diese Kapazitätsänderung ist mit dem erfindungsgemässen Messgerät 1, 11, 21, 31 messbar und wird anhand der Figur 8 näher erläutert.

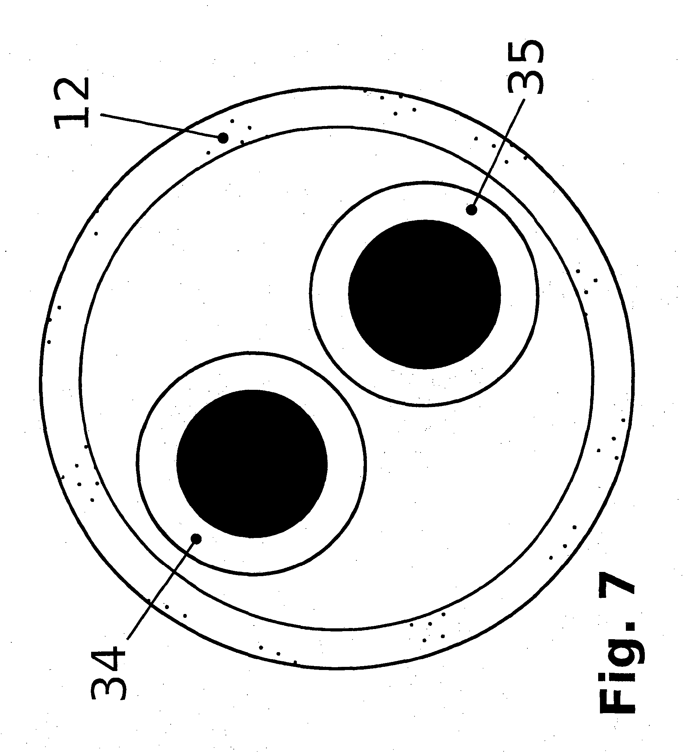

Figur 7 zeigt einen Querschnitt durch das Kabel 12, innerhalb welchem die beiden Leiter 34 und 35 angeordnet sind.

Mit der Figur 8 wird die Kapazität über den zeitlichen Verlauf dargestellt. Zwischen t0 und t2 findet keine große Kapazitätsänderung statt, da das Kabel 12 wenig in Bewegung ist. Zwischen den Bereich t2 und t3 wird von dem Messgerät 1 eine Schwankung bzw. Änderung der Kapazität gemessen. Dies hängt damit zusammen, dass das Kabel 12 abgelängt (Schnittpunkt S) bzw. das Kabelstück 4 von dem Kabel 12 abgeschnitten (Schnittpunkt S) wird. Die Ablängung erfolgt bevorzugt mechanisch mit einem Seitenschneider, wodurch größere, mechanische Bewegungen bei dem Kabel 12 auftreten. Nach dem Ablängen ist das Kabel 12 in einer Ruhephase, welche sich zwischen den Punkten t3 bis t4 befindet.

Die beiden, nacheinander folgenden Ereignisse: sehr hohe Schwankungen (t2 bis t3) und anschließende Ruhephase (t3 bis t4) wird von dem Messgerät 1 bzw. von der Recheneinheit 21.4 (=Auswerteeinheit) erkannt und als Ablängvorgang klassifiziert. Es wird nun mindestens ein Wert W1 vor dem Ablängvorgang (Schnittpunkt S1) und mindestens ein Wert W2 nach dem Ablängvorgang (Schnittpunkt S1), bevorzugt während der Ruhephase (t3 bis t4) herangezogen und daraus das Länge des Kabelstücks ΔL ermittelt.

Die Ermittlung des Wertes ΔL kann entweder von dem Messgerät 1 selbst oder von der Rechen- bzw. Auswerteeinheit durchgeführt werden. Des Weiteren können zur Ermittlung von ΔL auch mehrere Werte vor und nach dem Ablängvorgang herangezogen werden. Die Messung kann, wie bereits oben erwähnt, periodisch, sporadisch, getaktet stattfinden.

Nach der Ruhephase (t3 bis t4) wird wieder mit dem Kabel 12 gearbeitet. Dies bedeutet, dass auch kleinere Kapazitätsänderungen bzw. Schwankungen von dem Messgerät 12 wahrgenommen werden. Zwischen den Punkten t5 bis t6 findet ein weiterer Ablängvorgang (Schnittpunkt S2) statt und im Anschluss daran wieder eine Ruhephase zwischen den Punkten t6 bis t7. Diese beiden Ereignisse werden wieder von dem Messgerät 1 bzw. der Auswerteeinheit als Ablängvorgang erkannt, welche dann mindestens einen Wert vor und mindestens einen Wert nach dem Schnittpunkt S2 für die Ermittlung der Länge des Kabelstückes ΔL heranziehen.

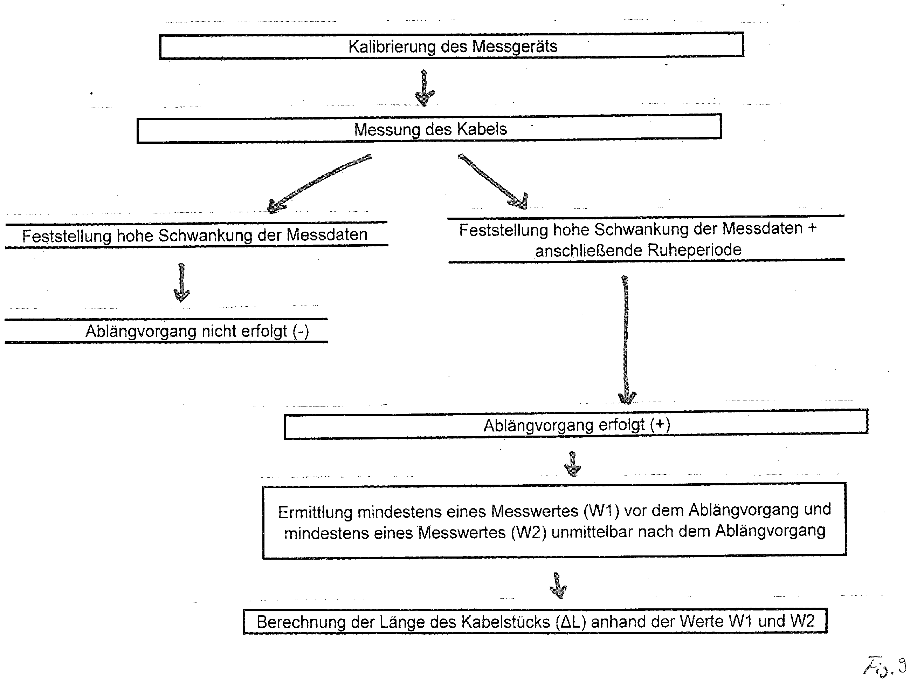

Mit der Figur 9 wird schematisch der erfindungsgemäße Verfahrensablauf dargestellt. In einem ersten Schritt findet eine Kalibrierung des Messgerätes 1 statt. Hierbei muss das Messgerät 1 hinsichtlich des zu messenden Kabels 2, 12 kalibriert werden. Danach findet die Messung mit dem Messgerät 1, 11, 21, 31 statt, welches eine zeitliche Abfolge von Messdaten aufnimmt, wobei eine Änderung, wie z.B. eine hohe Schwankung der Messdaten, von dem Messgerät 1 festgestellt werden kann. Findet ausschließlich eine hohe Schwankung der Messdaten statt, so fährt das Messgerät 1 mit der Messung fort. Wird eine hohe Schwankung der Messdaten festgestellt und im Anschluss daran eine Ruheperiode, so sind dies zwei Ereignisse, welche auf einen Ablängvorgang schließen lassen. Das Messgerät 1 und/oder die Auswerteeinheit ermitteln nun anhand mindestens einem Messwert vor dem Ereignis "Ablängvorgang" und mindestens einem Wert nach dem Ereignis "Ablängvorgang" die Länge des abgeschnitten Kabelstückes 4.

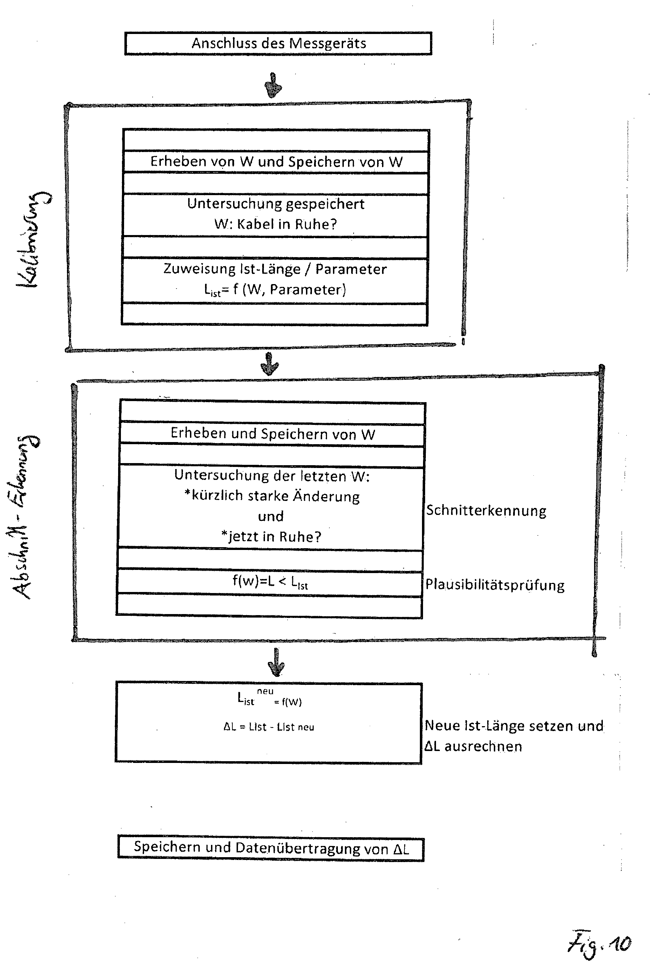

Mit der Figur 10 werden die erfindungsgemäßen Verfahrensschritte noch einmal im Detail gezeigt.

Gemäß dem ersten Verfahrensblock findet ein Anschluss des Messgerätes an dem zu messenden Kabel 2 oder der Kabelrolle 3 statt.

Der zweite Verfahrensblock umfasst den Kalibiervorgang. Hier findet ein Erheben bzw. Messen eines Wertes W und Speichern dieses Wertes W statt. Danach wird festgestellt, ob aktuell eine Änderung über die Zeit vorliegt oder ob sich das zu messende Kabel 2 in Ruhe befindet. Im Anschluss daran findet Zuweisung bzw. Ermittlung der Ist-Länge L_{Ist} statt.

Der dritte Verfahrensblock ist die Abschnittserkennung, mit welcher ein Abschnittvorgang eines Kabelstückes 4 von einem Kabel 2 festgestellt wird. Die Abschnitterkennung überprüft die letzten Messwerte W. Sobald eine starke Änderung (starke Schwankung) der Messwerte über die Zeit und eine anschließende Ruhephase festgestellt wird, klassifiziert dies das Messgerät 1 oder die Auswerteeinheit als Abschnittsvorgang. Danach findet eine Plausibilitätsprüfung statt, mit welcher überprüft wird, ob die ermittelte Länge L_{Ist} neu kleiner als die zuletzt festgestellte Länge L_{Ist} ist.

Im vierten Verfahrensblock findet eine Ermittlung der Länge ΔL des abgeschnittenen Kabelstückes 4 statt. ΔL ergibt sich durch L_{Ist} minus L_{Ist neu}.

Danach wird der neue Wert W gespeichert und die Daten werden an eine Auswerteeinheit, eine Recheneinheit oder einen Tablet-PC übertragen.

Zusammenfassend ist zu sagen, dass das erfindungsgemäße Messgerät eine Erfassung von zeitlich sich ändernden Messdaten einer ausgewählten Messgröße durchführt, wobei das Abschneiden eines bestimmten Kabelstückes von einem Kabel aufgrund von zwei zeitlich auseinander liegenden Ereignisse (Änderungen) erfasst wird.

Die beiden zeitlich relevanten Ereignisse sind eine starke Änderung (hohe Schwankung) der Messgrößen und im Anschluss daran eine Ruheperiode. Aufgrund eines Kalibriervorganges kann bei Bestimmung einer Ausgangsgröße auf die Kabellänge des Kabels geschlossen werden. Die Länge des abgeschnittenen Kabelstückes ΔL wird dann anhand von zwei zeitlich hintereinander folgenden Messwerten W1, W2 ermittelt.

Generell ist das erfindungsgemäße Verfahren für sämtliche Messverfahren geeignet, mit welchen elektrische Messgröße (Widerstand, Kapazität, Induktivität bzw. abgeleitete Werte) des Kabels erhoben werden können. Über deren zeitliche Änderung, eine Signalverarbeitung, sowie einer Kalibrierung kann auf die Gesamtlänge und die Länge der Abschnitte geschlossen werden.

Als Messmethoden sind beispielsweise besonders geeignet:
a) Kapazitätsbestimmung galvanisch
   Der Anschluss des Messgerätes erfolgt an mindestens einem Leitern des Kabels. Es findet dann beispielsweise eine Frequenzmessung statt. Die Änderung der Frequenz ist ein Maß für die Kapazitätsänderung zwischen den beiden Leitern.
b) Kapazitätsbestimmung drahtlos
   Das Messgerät regt über eine drahtlose Signaleinkopplung (Antenne/Spule) ohne galvanische Kopplung das Kabels zum Schwingen an und ermittelt daraus die Kapazität bzw. abgeleitete Größen.
c) Laufzeitbestimmung
   Das Messgerät wird an min. einen Leiter angeschlossen - über drahtlose oder drahtgebundene, eingekoppelte Signale und deren Laufzeit wird auf Länge des Kabels geschlossen.

Entscheidend ist, dass mit dem erfindungsgemäßen Verfahren unabhängig von einer bestimmten Messgröße ein Abschneiden bzw. Ablängen eines Kabelstückes von einem Kabel festgestellt werden kann. Im Anschluss daran findet dann eine Längenbestimmung des Kabels anhand von mindestens zwei zeitlich auseinander liegenden Messwerten statt. Aus der Differenz der beiden Messwerte lässt sich dann die Länge des abgeschnittenen Kabelstückes bestimmen.

### Bezugszeichenliste

- 1: Messgerät
- 2: Kabel
- 3: Kabelrolle
- 4: Kabelstück
- 5: Seitenschneider
- 6: Übertragungsvorrichtung mit Antenne
- 7: Smartphone
- 10: Vorrichtung zum Bevorraten und Ablängen
- 11: Messgerät
- 12: Kabel
- 13: Kabeltrommel
- 13': Gestell
- 14: Kabelstück
- 20: Vorrichtung zum Bevorraten und Ablängen
- 21: Messgerät
- 21.1: Messvorrichtung
- 21.2: Weiche
- 21.3: Übertragungseinheit
- 21.4: Recheneinheit
- 21.5: Speicher
- 21.6: Steuerleitung
- 22: Kabel
- 23: Kabelrolle
- 24: Kabelstück
- 27: Funkempfänger
- 30: Vorrichtung zum Bevorraten und Ablängen
- 31: Messgerät
- 32: Kabel
- 33: Kabeltrommel
- 33': Gestell
- 34: Leiter (1)
- 35: Leiter (2)
- A: Akkumulator
- S: Schnittpunkt
- ST: Stecker
- SD: Steckdose
- LD: Ladegerät
- ΔL: Länge des Kabelstücks
- M: Speicher
- W: Wert (W1, W2, W3)

## Patentansprüche

1. Messgerät (1, 11, 21, 31) zum Bestimmen von Kabellängen von einem Kabel (2, 12, 22, 32) anhand von durch das Messgerät (1, 11, 21, 31) erfassten Messdaten, wobei das Messgerät (1, 11, 21, 31) dazu ausgebildet ist, eine zeitliche Abfolge von Messdaten aufzunehmen und das Messgerät (1, 11, 21, 31) einen Speicher (M, 21.5) zum Speichern wenigstens eines Teils des Verlaufs der zeitlichen Abfolge der Messdaten, sowie eine Recheneinheit (21.4) umfasst, wobei das Messgerät (1, 11, 21, 31 hinsichtlich der Länge des zu messenden Kabels 2 12, 22, 32) kalibriert ist und ausgebildet ist, ein Auftreten einer Änderung im Verlauf der zeitlichen Abfolge der Messdaten festzustellen, wobei das Messgerät (1, 11, 21, 31) dazu ausgebildet ist, aus wenigstens zwei Messdaten, welche als letztes vor und unmittelbar nach dem Auftreten der Änderung gemessen wurden, eine Länge (ΔL) eines abgetrennten Kabelstücks (4) von dem Kabel (2, 12, 22, 32) zu ermitteln.

2. Messgerät (1, 11, 21, 31) zum Bestimmen von Kabellängen von einem Kabel (2, 12, 22, 32) anhand von durch das Messgerät (1, 11, 21, 31) erfassten Messdaten, wobei das Messgerät (1, 11, 21, 31) dazu ausgebildet ist, eine zeitliche Abfolge von Messdaten aufzunehmen und einen Speicher (M) zum Speichern wenigstens eines Teils des Verlaufs der zeitlichen Abfolge der Messdaten aufweist, wobei das Messgerät (1, 11, 21, 31) hinsichtlich der Länge des zu messenden Kabels (2, 12, 22, 32) kalibriert ist und ausgebildet ist, ein Auftreten einer Anderung im Verlauf der zeitlichen Abfolge der Messdaten festzustellen, wobei das Messgerät eine Übertragungsvorrichtung (6) zum Übertragen der vom Messgerät (1, 11, 21, 31) gemessenen Messdaten an eine Auswerteeinheit des Messgeräts umfasst und das Messgerät ausgebildet ist, beim Auftreten der Änderung im Verlauf der zeitlichen Abfolge der Messdaten wenigstens einen Teil der Messdaten, welche als letztes vor und unmittelbar nach dem Auftreten der Änderung gemessen wurden, mit der Übertragungsvorrichtung (6) an die Auswerteeinrichtung zu übertragen, und wobei das Messgerät (1, 11, 21, 31) oder die Auswerteeinheit ausgebildet ist, aus den Messdaten eine Länge (ΔL) eines abgetrennten Kabelstücks (4) von dem Kabel (2, 12, 22, 32) zu ermitteln.

3. Messgerät (1, 11, 21, 31) nach Anspruch 1 oder 2, **dadurch gekennzeichnet, dass** das Messgerät (1, 11, 21, 31) ausgebildet ist, von einem Messpunkt auf dem Kabel (2, 12, 22, 32), vorzugsweise am Ende des Kabels (2, 12, 22, 32), die Länge des Kabels (2, 12, 22, 32) zu messen.

4. Messgerät (1, 11, 21, 31) nach einem der vorgenannten Ansprüche, **dadurch gekennzeichnet, dass** das Messgerät einen Seitenschneider mit einer Vorrichtung aufweist, welche ausgebildet ist, dem Messgerät (1, 11, 21, 31) einen Impuls für die Ermittlung der Messdaten zu geben.

5. Messgerät (1, 11, 21, 31) nach einem der vorgenannten Ansprüche, **dadurch gekennzeichnet, dass** das Messgerät (1, 11, 21, 31) dazu ausgebildet ist, bei der Bestimmung von Kabellängen von Kabeln (2, 12, 22, 32) mit wenigstens zwei Adern die elektrische Verbindung zwischen wenigstens zwei der Adern zu überprüfen und das Auftreten einer elektrischen Verbindung als Auftreten einer Änderung im Verlauf der zeitlichen Abfolge der Messdaten anzunehmen.

6. Messgerät (31) nach einem der vorgenannten Ansprüche, **dadurch gekennzeichnet, dass** das Messgerät (31) einen Akkumulator (A) als Energiequelle und ein Ladegerät (LG) umfasst und das Ladegerät (LG) mit dem zu vermessenden Kabel (32) verbunden ist, sodass der Akkumulator (A) über das Kabel (32) aufladbar ist.

7. Messgerät (20) nach Anspruch 2, **dadurch gekennzeichnet, dass** die Übertragungsvorrichtung mit dem zu vermessenden Kabel (22) verbunden ist, sodass das Kabel (22) als Antenne zur Übertragung der Messdaten zu der Auswerteeinheit genutzt wird, wobei ein Verstärker zwischengeschaltet ist.

8. Vorrichtung (10, 20, 30) zum Bevorraten und Ablängen von Kabeln, umfassend eine Kabelrolle, insbesondere eine Kabeltrommel (3, 13, 23, 33) zum Bevorraten eines Kabels (2, 12, 22, 32), **dadurch gekennzeichnet, dass** die Vorrichtung ein Messgerät (1, 11, 21, 31) nach einem der vorgenannten Ansprüche aufweist.

9. Verfahren zum Bestimmen von Kabellängen (12, 22) (12, 22) anhand von durch ein Messgerät (1, 11, 21, 31) erfassten Messdaten einer Messgröße, welche der Länge des zu bestimmenden Kabels entspricht, wobei das Messgerät (1, 11, 21, 31) eine zeitliche Abfolge von Messdaten aufnimmt, wobei das Verfahren durch folgende Verfahrensschritte gekennzeichnet ist:
9.1: Kalibrierung des Messgerätes hinsichtlich der Länge des zu messenden Kabels (2, 12, 22, 32);
9.2: Feststellung eines Abtrennvorganges eines Kabelstücks (4) von dem Kabel (2, 12, 22, 32) anhand von mindestens einer zeitlichen Änderung der Messdaten aus der erfassten Messgröße;
9.3: Ermittlung der Länge des Kabels (2, 12, 22, 32) anhand von mindestens zwei Messdaten (W1, W2), welche vor und nach dem Auftreten des Abtrennvorganges im Verlauf der zeitlichen Abfolge der Messdaten gemessen wurden.

10. Verfahren nach Anspruch 9, **dadurch gekennzeichnet, dass** die Änderung im Verlauf der zeitlichen Abfolge durch mindestens zwei Ereignisse hervorgerufen wird, welche eine hohe Änderung der Messdaten und eine anschließende Ruheperiode der Messdaten sind.

11. Verfahren nach Anspruch 9 oder 10, **dadurch gekennzeichnet, dass** das Messgerät (1, 11, 21, 31) als Messgröße eine drahtgebundene Kapazitätsmessung durchführt.

12. Verfahren nach Anspruch 9 oder 10, **dadurch gekennzeichnet, dass** das Messgerät (1, 11, 21, 31) als Messgröße eine drahtlose Kapazitätsmessung durchführt.

13. Verfahren nach Anspruch 9 oder 10, **dadurch gekennzeichnet, dass** das das Messgerät (1, 11, 21, 31) als Messgröße eine Laufzeitmessung durchführt.

14. Verfahren nach einem der Ansprüche 9 bis 13, **dadurch gekennzeichnet, dass** das Messgerät (1, 11, 21, 31) anhand der zeitlich sich ändernden Messdaten (W1, W2) der erfassten Messgröße die Länge ΔL des Kabelstückes (4) bestimmt, welches von dem Kabel (2, 12, 22, 32) abgetrennt wurde.

15. Verfahren nach einem der Ansprüche 9 bis 13, **dadurch gekennzeichnet, dass** eine Recheneinheit anhand der zeitlich sich ändernden Messdaten (W1, W2) der erfassten Messgröße eine Länge ΔL eines Kabelstückes (4) bestimmt, welches von dem Kabel (2, 12, 22, 32) abgetrennt wurde.

## Claims

1. Measuring device (1, 11, 21, 31) for determining cable lengths of a cable (2, 12, 22, 32) using measured data recorded by the measuring device (1, 11, 21, 31), wherein the measuring device (1, 11, 21, 31) is designed to receive a chronological sequence of measured data and the measuring device (1, 11, 21, 31) comprises a memory (M, 21.5) for storing at least a part of the course of the chronological sequence of measured data, as well as a computing unit (21.4), wherein the measuring device (1, 11, 21, 31) is calibrated with regard to the length of the cable (2, 12, 22, 32) to be measured and is designed to detect the occurrence of a change in the course of the chronological sequence of measured data, wherein the measuring device (1, 11, 21, 31) is designed to ascertain a length (ΔL) of a cable piece (4) cut off from the cable (2, 12, 22, 32) from at least two measured data which have been measured last before and immediately after the occurrence of the change.

2. Measuring device (1, 11, 21, 31) for determining cable lengths of a cable (2, 12, 22, 32) using measured data recorded by the measuring device (1, 11, 21, 31), wherein the measuring device (1, 11, 21, 31) is designed to receive a chronological sequence of measured data and has a memory (M) for storing at least a part of the course of the chronological sequence of measured data, wherein the measuring device (1, 11, 21, 31) is calibrated with regard to the length of the cable (2, 12, 22, 32) to be measured and is designed to detect the occurrence of a change in the course of the chronological sequence of measured data, wherein the measuring device comprises a transmission device (6) to transmit the measured data measured by the measuring device (1, 11, 21, 31) to an evaluating unit of the measuring device and the measuring device is designed, during the occurrence of the change in the course of the chronological sequence of measured data, to transmit at least a part of the measured data, which have been measured last before and immediately after the occurrence of the change, to the evaluating unit using the transmission device (6), and wherein the measuring device (1, 11, 21, 31) or the evaluating unit is designed to ascertain a length (ΔL) of a cable piece (4) cut off from the cable (2, 12, 22, 32) from the measured data.

3. Measuring device (1, 11, 21, 31) according to claim 1 or 2, **characterised in that** the measuring device (1, 11, 21, 31) is designed to measure the length of the cable (2, 12, 22, 32) from a measuring point on the cable (2, 12, 22, 32), preferably at the end of the cable (2, 12, 22, 32).

4. Measuring device (1, 11, 21, 31) according to one of the aforementioned claims, **characterised in that** the measuring device has a side cutter with a device which is designed to give the measuring device (1, 11, 21, 31) a pulse for ascertaining the measured data.

5. Measuring device (1, 11, 21, 31) according to one of the aforementioned claims, **characterised in that** the measuring device (1, 11, 21, 31) is designed, when determining cable lengths of cables (2, 12, 22, 32) with at least two leads, to check the electrical connection between at least two of the leads and to accept the occurrence of an electrical connection as the occurrence of a change in the course of the chronological sequence of measured data.

6. Measuring device (31) according to one of the aforementioned claims, **characterised in that** the measuring device (31) comprises an accumulator (A) as the energy source and a charging device (LG) and the charging device (LG) is connected to the cable (32) to be measured so that the accumulator (A) is chargeable via the cable (32).

7. Measuring device (20) according to claim 2, **characterised in that** the transmission device is connected to the cable (22) to be measured so that the cable (22) is used as an antenna for the transmission of measured data to the evaluating unit, wherein an intensifier is connected in series.

8. Device (10, 20, 30) for supplying and cutting cables to length comprising a roll of cable, in particular a cable drum (3, 13, 23, 33), for supplying a cable (2, 12, 22, 32), **characterised in that** the device has a measuring device (1, 11, 21, 31) according to one of the aforementioned claims.

9. Method for determining cable lengths (12, 22) (12, 22) using measured data recorded by a measuring device (1, 11, 21, 31) of a measuring parameter which corresponds to the length of the cable to be determined, wherein the measuring device (1, 11, 21, 31) receives a chronological sequence of measured data, wherein the method is **characterised by** the following method steps:
9.1: calibration of the measuring device with regard to the length of the cable (2, 12, 22, 32) to be measured;
9.2: detection of a cutting-off process of a cable piece (4) from the cable (2, 12, 22, 32) using at least one chronological change in the measured data from the recorded measuring parameter;
9.3: ascertaining the length of the cable (2, 12, 22, 32) using at least two measured data (W1, W2) which have been measured before and after the occurrence of the cutting-off process in the course of the chronological sequence of measured data.

10. Method according to claim 9, **characterised in that** the change in the course of the chronological sequence is caused by at least two events which are a considerable change in the measured data and an ensuing rest period of the measured data.

11. Method according to claim 9 or 10, **characterised in that** the measuring device (1, 11, 21, 31) carries out a wire-bound capacitance measurement as the measuring parameter.

12. Method according to claim 9 or 10, **characterised in that** the measuring device (1, 11, 21, 31) carries out a wireless capacitance measurement as the measuring parameter.

13. Method according to claim 9 or 10, **characterised in that** the measuring device (1, 11, 21, 31) carries out a running-time measurement as the measuring parameter.

14. Method according to one of claims 9 to 13, **characterised in that** the measuring device (1, 11, 21, 31) determines the length ΔL of the cable piece (4), which has been cut off from the cable (2, 12, 22, 32), using the chronologically changing measured data (W1, W2) of the recorded measuring parameter.

15. Method according to one of claims 9 to 13, **characterised in that** a computing unit determines a length ΔL of a cable piece (4), which has been cut off from the cable (2, 12, 22, 32), using the chronologically changing measured data (W1, W2) of the recorded measuring parameter.

## Revendications

1. Appareil de mesure (1, 11, 21, 31) pour déterminer des longueurs de câble d'un câble (2, 12, 22, 32) à l'aide de données de mesure relevées par l'appareil de mesure (1, 11, 21, 31), dans lequel l'appareil de mesure (1, 11, 21, 31) est formé pour capter une séquence temporelle de données de mesure, et l'appareil de mesure (1, 11, 21, 31) comprend une mémoire (M, 21.5) pour stocker une partie au moins de la courbe de la séquence temporelle des données de mesure, ainsi qu'une unité de calcul (21.4), dans lequel l'appareil de mesure (1, 11, 21, 31) est étalonné relativement à la longueur du câble à mesurer (2, 12, 22, 32) et est formé pour constater l'apparition d'une variation sur la courbe de la séquence temporelle des données de mesure, dans lequel l'appareil de mesure (1, 11, 21, 31) est formé pour déterminer, à partir d'au moins deux données de mesure qui ont été mesurées en dernier avant et immédiatement après l'apparition de la variation, une longueur (ΔL) d'un morceau de câble coupé (4) du câble (2, 12, 22, 32).

2. Appareil de mesure (1, 11, 21, 31) pour déterminer des longueurs de câble d'un câble (2, 12, 22, 32) à l'aide de données de mesure relevées par l'appareil de mesure (1, 11, 21, 31), dans lequel l'appareil de mesure (1, 11, 21, 31) est formé pour capter une séquence temporelle de données de mesure, et comporte une mémoire (M) pour stocker une partie au moins de la courbe de la séquence temporelle des données de mesure, dans lequel l'appareil de mesure (1, 11, 21, 31) est étalonné relativement à la longueur du câble à mesurer (2, 12, 22, 32) et est formé pour constater l'apparition d'une variation sur la courbe de la séquence temporelle des données de mesure, dans lequel l'appareil de mesure comprend un dispositif de transmission (6) pour transmettre les données de mesure mesurées par l'appareil de mesure (1, 11, 21, 31) à une unité d'analyse de l'appareil de mesure, et l'appareil de mesure est formé pour transmettre avec le dispositif de transmission (6) au dispositif d'analyse, lors de l'apparition de la variation sur la courbe de la séquence temporelle des données de mesure, une partie au moins des données de mesure qui ont été mesurées en dernier avant et immédiatement après l'apparition de la variation, dans lequel l'appareil de mesure (1, 11, 21, 31) ou l'unité de mesure est formé pour déterminer, à partir des données de mesure, une longueur (ΔL) d'un morceau de câble coupé (4) du câble (2, 12, 22, 32).

3. Appareil de mesure (1, 11, 21, 31) selon la revendication 1 ou 2, **caractérisé en ce que** l'appareil de mesure (1, 11, 21, 31) est formé pour mesurer depuis un point de mesure sur le câble (2, 12, 22, 32), de préférence à l'extrémité du câble (2, 12, 22, 32), la longueur du câble (2, 12, 22, 32).

4. Appareil de mesure (1, 11, 21, 31) selon l'une des revendications précédentes, **caractérisé en ce que** l'appareil de mesure comporte une pince coupante diagonale avec un dispositif qui est formé pour donner à l'appareil de mesure (1, 11, 21, 31) une impulsion pour déterminer les données de mesure.

5. Appareil de mesure (1, 11, 21, 31) selon l'une des revendications précédentes, **caractérisé en ce que** l'appareil de mesure (1, 11, 21, 31) est formé pour contrôler, dans le cas de la détermination de longueurs de câbles (2, 12, 22, 32) avec au moins deux conducteurs, la liaison électrique entre au moins deux des conducteurs et pour supposer comme apparition d'une variation sur la courbe de la séquence temporelle des donnes de mesure l'apparition d'une liaison électrique.

6. Appareil de mesure selon l'une des revendications précédentes, **caractérisé en ce que** l'appareil de mesure (31) comprend un accumulateur (A) comme source d'énergie et un chargeur (LG), et le chargeur (LG) est relié au câble à mesurer (32), de sorte que l'accumulateur (A) peut être rechargé par le câble (32).

7. Appareil de mesure (20) selon la revendication 2, **caractérisé en ce que** le dispositif de transmission est relié au câble à mesurer (22), de sorte que le câble (22) est utilisé comme antenne pour la transmission des données de mesure à l'unité d'analyse, dans lequel un amplificateur est monté entre les deux.

8. Dispositif (10, 20, 30) pour l'approvisionnement en câbles et la mise à la longueur de ceux-ci, comprenant un rouleau de câble, en particulier un tambour de câble (3, 13, 23, 33) pour l'approvisionnement en un câble (2, 12, 22, 32), **caractérisé en ce que** le dispositif comporte un appareil de mesure (1, 11, 21, 31) selon l'une des revendications précédentes.

9. Procédé pour déterminer des longueurs de câble (12, 22) (12, 22) à l'aide de données de mesure, relevées par un appareil de mesure (1, 11, 21, 31), d'une grandeur de mesure qui correspond à la longueur du câble à déterminer, dans lequel l'appareil de mesure (1, 11, 21, 31) capte une séquence temporelle de données de mesure, dans lequel le procédé est **caractérisé par** les étapes de procédé suivantes :
9.1 : étalonnage de l'appareil de mesure relativement à la longueur du câble à mesurer (2, 12, 22, 32) ;
9.2 : constatation d'une opération de coupe d'un morceau de câble (4) du câble (2, 12, 22, 32) à l'aide d'au moins une variation temporelle des données de mesure à partir de la grandeur de mesure relevée ;
9.3 : détermination de la longueur du câble (2, 12, 22, 32) à l'aide d'au moins deux données de mesure (W1, W2) qui ont été mesurées avant et après l'apparition de l'opération de coupe sur la courbe de la séquence temporelle des données de mesure.

10. Procédé selon la revendication 9, **caractérisé en ce que** la variation sur la courbe de la séquence temporelle est provoquée par au moins deux événements qui sont une forte variation des données de mesure et une période de repos consécutive des données de mesure.

11. Procédé selon la revendication 9 ou 10, **caractérisé en ce que** l'appareil de mesure (1, 11, 21, 31, 31) réalise comme grandeur de mesure une mesure de capacité par fil.

12. Procédé selon la revendication 9 ou 10, **caractérisé en ce que** l'appareil de mesure (1, 11, 21, 31) réalise comme grandeur de mesure une mesure de capacité sans fil.

13. Procédé selon la revendication 9 ou 10, **caractérisé en ce que** l'appareil de mesure (1, 11, 21, 31) réalise comme grandeur de mesure une mesure de temps de propagation.

14. Procédé selon l'une des revendications 9 à 13, **caractérisé en ce que** l'appareil de mesure (1, 11, 21, 31) détermine à l'aide des données de mesure (W1, W2) de la grandeur de mesure relevée qui varient dans le temps la longueur ΔL du morceau de câble (4) qui a été coupé du câble (2, 12, 22, 32).

15. Procédé selon l'une des revendications 9 à 13, **caractérisé en ce qu'**une unité de calcul détermine à l'aide des données de mesure (W1, W2) de la grandeur de mesure relevée qui varient dans le temps la longueur ΔL d'un morceau de câble (4) qui a été coupé du câble (2, 12, 22, 32).
